(19) Europäisches Patentamt
European Patent Office
Office européen des brevets

(11) **EP 2 283 100 B1**

(12) **EUROPÄISCHE PATENTSCHRIFT**

(45) Veröffentlichungstag und Bekanntmachung des Hinweises auf die Patenterteilung:
**18.01.2012   Patentblatt 2012/03**

(21) Anmeldenummer: **09745037.3**

(22) Anmeldetag: **02.11.2009**

(51) Int Cl.:
***C09J 153/02*** *(2006.01)*

(86) Internationale Anmeldenummer:
**PCT/EP2009/064444**

(87) Internationale Veröffentlichungsnummer:
**WO 2010/054944 (20.05.2010 Gazette 2010/20)**

(54) **STRAHLENCHEMISCH VERNETZBARE, GESCHÄUMTE SELBSTKLEBEMASSE BASIEREND AUF VINYLAROMATENBLOCKCOPOLYMEREN**

RADIATION-CROSSLINKABLE FOAMED SELF-ADHESIVE BASED ON VINYLAROMATIC BLOCK COPOLYMERS

MATIÈRE AUTOCOLLANTE À BASE DE COPOLYMÈRES EN BLOCS AROMATE VINYLIQUE, MOUSSÉE ET RÉTICULABLE PAR RADIOCHIMIE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.11.2008   DE 102008056980**

(43) Veröffentlichungstag der Anmeldung:
**16.02.2011   Patentblatt 2011/07**

(73) Patentinhaber: **TESA SE**
**20253 Hamburg (DE)**

(72) Erfinder:
• **CZERWONATIS, Franziska**
**21075 Hamburg (DE)**
• **KRAWINKEL, Thorsten**
**22457 Hamburg (DE)**
• **BURMEISTER, Axel**
**21244 Buchholz (DE)**
• **THORMEIER, Sabine**
**20359 Hamburg (DE)**

(56) Entgegenhaltungen:
**EP-A2- 0 257 984        WO-A1-00/06637**
**WO-A1-03/011954        WO-A1-2009/090119**
**US-A1- 2004 229 000**

Bemerkungen:
Die Akte enthält technische Angaben, die nach dem Eingang der Anmeldung eingereicht wurden und die nicht in dieser Patentschrift enthalten sind.

**EP 2 283 100 B1**

**Beschreibung**

Die Erfindung betrifft eine strahlenchemisch vernetzbare, geschäumte Selbstklebemasse basierend auf Vinylaromatenblockcopolymeren.

Es ist eine Vielzahl an doppelseitigen Selbstklebebändern mit Polymerschaumkern bekannt, welche für die Verklebung in unterschiedlichen Anwendungsbereichen eingesetzt werden wie zum Beispiel die Formkörperverklebung an Karosserien im Automobilbereich oder die Befestigung von Plexiglasverkleidungen. Polymerschaumkerne aus einer geschäumten Polymermatrix zeichnen sich dadurch aus, dass sie eine geringere Dichte als die ungeschäumte Polymermatrix besitzen. Diese Dichtereduzierung kann auf unterschiedliche Weisen erreicht werden wie zum Beispiel durch hohle Glas- oder Polymerkügelchen als Füllstoff, durch physikalisches Schäumen mittels Kohlenstoffdioxid oder durch Zugabe von expandierbaren Polymer-Kügelchen. Die doppelseitigen Selbstklebebänder besitzen üblicherweise einen Polymerschaumkem, bestehend aus beispielsweise Polyethylen, Polyurethan oder Polyvinylchlorid, und zwei dem Schaumkern anhaftenden Selbstklebemassen.

Bei Anwendungen, in denen ein Wiederablösen des Klebebandes gewünscht und/oder erforderlich ist, wirkt sich dieser Dreischichtaufbau nachteilig aus, da es aufgrund der beim Ablöseprozess auftretenden Kräfte zum Spalten des Schaums oder zum Adhäsionsbruch zwischen der Grenzschicht aus Klebemasse und Polymerschaum kommen kann.

Eine sehr geringe Dichte des eingesetzten Polymerschaumkerns aus zum Beispiel PE oder PU bewirkt eine geringe Kohäsion in der Schaummatrix. Folglich kann der Polymerschaumkern permanenten hohen Scherbelastungen, die auf das verklebte Produkt einwirken, nur minderwertig standhalten, so dass die große Gefahr besteht, dass der Schaum in sich spaltet.

Haftklebemassen auf Basis von Styrolblockcopolymeren zeichnen sich durch hohe Verklebungsfestigkeiten (bedingt durch die gleichzeitige Realisierung einer sehr hohen Kohäsion und sehr hoher Klebkräfte) sowie durch sehr hohe Zugfestigkeiten, welche insbesondere für einen reißerfreien Ablöseprozess wesentlich sind, aus.

Die im Markt befindlichen Produkte, die Haftklebemassen basierend auf Styrolblockcopolymeren nutzen, zeigen Schwächen bei der Verklebungsfestigkeit bei Temperaturen oberhalb von 50 °C. Durch ein Erweichen der vornehmlich aus Polystyrol bestehenden Hartphasen (Blockpolystyroldomänen) kommt es insbesondere bei der Verklebung von mittelschweren Gegenständen zum kohäsiven Versagen der Haftklebestreifen.

Ein Versagen der Verklebung tritt bei reiner Scherbelastung und besonders bei einer Kippscherbelastung, bei der ein Drehmoment wirksam ist, auf.

In WO 93/24547 A1 und WO 97/29140 A1 sind Styrolblockcopolymere beschrieben, die vernetzbar sind und somit eine bessere Temperaturbeständigkeit besitzen als herkömmliche Styrolblockcopolymere. Auch Selbstklebemassen aus solchen Polymeren sind beschrieben, die aber auf einen Träger extrudiert beziehungsweise beschichtet werden müssen.

In der DE 21 05 877 C wird ein Klebeband aufgezeigt, das aus einem Träger besteht, der auf mindestens einer Seite mit einem mikrozellulären druckempfindlichen Klebstoff beschichtet ist und dessen Klebstoffschicht einen Keimbildner enthält, wobei die Zellen der Klebstoffschicht geschlossen und vollständig in der Klebstoffschicht verteilt sind. Dieses Klebeband kann sich der unregelmäßigen Oberfläche, auf die es gebracht wird, anpassen und somit zu einer relativ dauerhaften Verklebung führen, zeigt aber andererseits auch nur eine geringe Erholung, wenn es auf die Hälfte der ursprünglichen Dicke zusammengedrückt worden ist. Die Hohlräume in der Klebmasse bieten Ansätze für seitliches Eintreten von Lösungsmitteln und Wasser in die Klebfuge was sehr unerwünscht ist. Weiterhin kann der vollständige Durchtritt von Lösungsmitteln oder Wasser durch das gesamte Klebeband nicht ausgeschlossen werden.

In der EP 0 257 984 A1 werden Klebebänder offenbart, die zumindest einseitig eine geschäumte Klebebeschichtung aufweisen. In dieser Klebebeschichtung sind Polymerkügelchen enthalten, die ihrerseits eine Flüssigkeit aus Kohlenwasserstoffen enthalten und bei erhöhten Temperaturen expandieren. Die Gerüstpolymere der Selbstklebemassen können aus Kautschuken oder Polyacrylaten bestehen. Die Mikrohohlkugeln werden hier entweder vor oder nach der Polymerisation zugesetzt. Die Mikroballons enthaltenden Selbstklebemassen werden aus Lösemittel verarbeitet und zu Klebebändem ausgeformt. Der Schritt der Schäumung erfolgt dabei konsequent nach der Beschichtung. So werden mikroraue Oberflächen erhalten. Daraus resultieren Eigenschaften wie insbesondere zerstörungsfreie Wiederablösbarkeit und Repositionierbarkeit. Der Effekt der besseren Repositionierbarkeit durch mikroraue Oberflächen von mit Mikroballon geschäumten Selbstklebemassen wird auch in weiteren Schriften wie DE 35 37 433 A1 oder WO 95/31225 A1 beschrieben.

Die mikroraue Oberfläche wird verwendet, um eine blasenfreie Verklebung zu erzeugen. Diese Verwendung offenbaren auch die EP 0 693 097 A1 und die WO 98/18878 A1.

Den vorteilhaften Eigenschaften der mikrorauen Oberfläche steht aber immer eine deutliche Reduzierung der Verklebungsfestigkeit beziehungsweise der Schälfestigkeit gegenüber. Deswegen wird in der DE 197 30 854 A1 eine mit Mikroballons aufgeschäumte Trägerschicht vorgeschlagen, welche zur Vermeidung des Verklebungsfestigkeitsverlustes die Verwendung von ungeschäumten druckempfindlichen Selbstklebemassen ober- und unterhalb eines geschäumten Kerns vorschlägt.

WO-A-2009/90119 offenbart Klebefilme aus SBS oder SIS, Microkapseln und Klebharz. WO-A-2003/11954 Klebebänder aus SBS oder SIS mit einem Styrolgehalt von 9% oder 15%, 2 Teilen Microkapseln und Klebharz.

EP-A-257984 offenbart druckempfindliche Klebstoffe für geschäumte Klebebänder die SIS, Klebharz und expandierende Microkugeln enthalten.

US-A-2004/229000 offenbart geschäumte Klebefolien aus Blockpolymer A (SIS Polymer B aus US5393787, das mehr als 30% Isopren enthält), Regalite Klebeharz mit Microkugeln. Eine Vernetzung mit Elektronenstrahl wird auch beschrieben.

WO-A-00/06637 offenbart einlagige Klebeschäume mit expandierten Microkugeln, SIS und Klebharz.

Aufgabe der Erfindung ist es, eine verbesserte Selbstklebemasse auf Basis von Vinylaromaten- beziehungsweise Styrolblockcopolymeren mit den vorteilhaften Eigenschaften einer mit expandierten Mikroballons geschäumten Polymermatrix zu kombinieren beziehungsweise zu vereinigen.

Gelöst wird diese Aufgabe mit einer gattungsgemäßen Selbstklebemasse, wie sie im Hauptanspruch niedergelegt ist. Gegenstand der Unteransprüche sind dabei vorteilhafte Weiterbildungen der Selbstklebemasse sowie Verwendungen derselben.

Demgemäß betrifft die Erfindung eine Selbstklebemasse bestehend aus einem Gemisch enthaltend:

- einen Polymerblend aus thermoplastischen und/oder nicht-thermoplastischen Elastomeren mit mindestens einem Vinylaromatenblockcopolymer, das einen Anteil größer 30 Gew.-% an 1,2-verknüpften Dien im Elastomerblock enthält
- mindestens ein Klebharz
- expandierte polymere Mikrokugeln

wobei das Vinylaromatenblockcopolymer durch Elektronen- und/oder UV-Strahlen im Elastomerblock vernetzt ist.

Als Vinylaromaten kommen alle vinylgruppenhaltigen substituierten und unsubstituierten Aromaten in Frage. Beispiele geeigneter Vinylaromaten sind Styrol, alpha-Methylstyrol, Vinyltoluol, p-tert.-Butylstyrol oder p-Methyl-alpha-Methylstyrol, insbesondere aber Styrol.

Das beschriebene Vinylaromaten- beziehungsweise Styrolblockcopolymer wird durch Elektronen- und/oder UV-Strahlen im Elastomerblock vernetzt. Die Vernetzung dieser geschäumten Selbstklebemasse erfolgt über Ultraviolett-Bestrahlung oder mit Hilfe von Elektronenstrahlen. Es hat sich gezeigt, dass durch diese strahlenchemische Vernetzung die kohäsiven Eigenschaften der geschäumten Selbstklebemasse bei hohen Temperaturen verbessert werden können, wobei gleichzeitig die klebtechnischen Eigenschaften beibehalten werden.

Vorteilhafterweise für die Polymerblends ist das nicht-thermoplastisches Elastomer gewählt aus der Gruppe der Naturkautschuke oder der Synthesekautschuke oder besteht aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Vorteilhafterweise für die Polymerblends ist das thermoplastische Elastomer gewählt aus der Gruppe der Styrolblockcopolymere und vor allem der Styrol-Isopren-Styrol (SIS)- und Styrol-Butadien-Styrol (SBS)-Typen oder auch aus der Gruppe der Polyacrylate.

Bei Mikroballons handelt es sich um elastische Hohlkugeln, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich wie zum Beispiel von der Firma Akzo Nobel die Expancel DU-Typen (dry unexpanded), welche sich im Wesentlichen über ihre Größe (6 bis 45 $\mu$m Durchmesser im unexpandierten Zustand) und ihre zur Expansion benötigten Starttemperatur (75 bis 220 °C) differenzieren. Wenn der Mikroballontyp beziehungsweise die Schäumungstemperatur auf das zur Massecompoundierung benötigte Temperaturprofil und die Maschinenparameter abgestimmt sind, können Massecompoundierung und Schäumung auch gleichzeitig in einem Schritt erfolgen.

Weiterhin sind unexpandierte Mikroballontypen auch als wässrige Dispersion mit einem Feststoff- beziehungsweise Mikroballonanteil von 40 bis 45 Gew.-% erhältlich, weiterhin auch als polymergebundende Mikroballons (Masterbatche), zum Beispiel in Ethylvinylacetat mit einer Mikroballonkonzentration von 65 Gew.-%. Sowohl die Mikroballon-Dispersionen als auch die Masterbatche sind wie die DU-Typen zur Schäumung von erfindungsgemäßen Klebemassen geeignet.

Der Anteil der Mikroballons vor der Expansion in der Klebemasse liegt gemäß einer bevorzugten Ausführungsform der Erfindung zwischen größer 0 Gew.-% und 30 Gew.-%, insbesondere zwischen 1,5 Gew.-% und 10 Gew.-%. Weiter vorzugsweise weisen die Mikroballons bei 25 °C einen Durchmesser von 3 μm bis 40 μm, insbesondere 5 μm bis 20 μm und/oder nach Temperatureinwirkung einen Durchmesser von 20 μm bis 200 μm, insbesondere 40 μm bis 100 μm auf.

Durch diese Fähigkeit der Volumenvergrößerung kann die Einarbeitung und homogene Verteilung der Mikroballons in eine Polymermatrix die resultierende Dichte nach Aktivierung der Mikroballons erheblich auf bis zu 150 kg/m$^3$ senken.

Die Schäumung der erfindungsgemäßen Selbstklebemasse hat neben der Dichtereduzierung auch besondere Eigenschaften wie eine erhöhte Kohäsion der Polymermatrix, wodurch ein rückstandsfreies Wiederablösen des Klebebandes gegeben ist. Durch weitere strahlenchemische Vernetzung des geschäumten Selbstklebebandes werden zudem auch die Stabilität und Scherfestigkeit unter erhöhter Temperatur > 50 °C verbessert.

Als Klebharze können bei der Selbstklebemasse beispielsweise als Hauptkomponente insbesondere hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals), hydrierte Polymerisate von bevorzugt C$_8$- und C$_9$-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von C$_8$- und C$_9$-Aromaten (zum Beispiel Regalite und Regalrez Serien; Eastman Inc. oder Arkon M; Arakawa), hydrierte Polyterpenharze (zum Beispiel Clearon M; Yasuhara), hydrierte C$_5$/C$_9$-Polyme- risate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Hydrierte Kohlenwasserstoffharze sind als Abmischkomponente für vernetzbare Styrolblockcopolymere, wie beispielsweise in EP 0 447 855 A1, US 4,133,731 A und US 4,820,746 A beschrieben, besonders geeignet, da durch die Abwesenheit von Doppelbindungen die Vernetzung nicht gestört werden kann.

Darüber hinaus können aber auch nicht hydrierte Harze eingesetzt werden, wenn Vernetzungspromotoren wie zum Beispiel mehrfunktionelle Acrylate eingesetzt werden.

Besonders bevorzugt unter diesen Bedingungen ist der Einsatz von Terpenharzen auf der Basis von α-Pinen (Piccolyte A- Serie der Firma Hercules, Dercolyte A- Serie der Firma DRT), da diese neben einer hohen Kohäsion auch eine sehr hohe Adhäsion auch bei hohen Temperaturen gewährleisten.

Aber auch andere nicht hydrierte Kohlenwasserstoffharze, nicht hydrierte Analoga der oben beschriebenen hydrierten Harze, können eingesetzt werden. Durch die bevorzugte Verwendung von Vernetzungspromotoren ist ebenfalls der Einsatz von kolophoniumbasierenden Harzen möglich. Wegen ihrer geringen Adhäsion bei erhöhten Temperaturen werden diese hauptsächlich nur als Abmischkomponenten eingesetzt.

Der Anteil der Klebharze bezogen auf die gesamte Klebmasse beträgt gemäß einer vorteilhaften Ausführungsform zwischen 20 Gew.-% und 70 Gew.-%, insbesondere zwischen 40 Gew.-% und 60 Gew.-%.

Zur Stabilisierung der Haftklebemasse werden üblicherweise primäre Antioxidantien wie zum Beispiel sterisch gehinderte Phenole, sekundäre Antioxidantien wie zum Beispiel Phosphite oder Thioether und/oder C-Radikalfänger zugesetzt.

Als weitere Additive können typischerweise Lichtschutzmittel wie zum Beispiel UV-Absorber und sterisch gehinderte Amine, Antiozonantien, Metalldesaktivatoren, Verarbeitungshilfsmittel und endblockverstärkende Harze eingesetzt werden.

Plastifizierungsmittel wie zum Beispiel Flüssigharze, Weichmacheröle oder niedermolekulare flüssige Polymere wie zum Beispiel niedermolekulare Polyisobutylene mit Molmassen von weniger als 1500 g/mol (Zahlenmittel) oder flüssige EPDM-Typen können in geringen Mengen von weniger als 20 Gew.-% eingesetzt werden.

Füllstoffe wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe sowie optische Aufheller können ebenfalls verwendet werden.

Für eine Erhöhung der Strahlenausbeute werden gegebenenfalls Vernetzungspromotoren für die Elektronenstrahlvernetzung verwendet. Als Vernetzungspromotoren können beispielsweise Vernetzungspromotoren auf der Basis multifunktionaler Acrylate oder Thiole eingesetzt werden. Bei der UV-Vernetzung müssen UV-Vernetzer wie zum Beispiel Irgacure 651 der Firma Ciba Geigy eingesetzt werden.

In einer weiteren vorteilhaften Ausführungsform des erfindungsgemäßen Gegenstandes kann die strahlenchemisch vernetzbare, geschäumte Selbstklebemasse zu einem doppelseitigen Klebeband weiterverarbeitet werden, indem die Selbstklebemasse bahnförmig ausgeformt wird, beispielsweise auf einen Liner, der vor dem Verkleben des Klebebands entfernt wird.

Dabei können sowohl dünne ≥ 40μm als auch dicke Schäume bis 3000 μm im Einschichtaufbau hergestellt werden.

Die Dicke der Selbstklebemasse in einem Klebeband auf einem bahnförmigen Trägermaterial liegt vorzugsweise zwischen 20 μm und 3000 μm, besonders vorzugsweise zwischen 40 μm und 150 μm oder aufgetragen auf einem Releasematerial 20 μm bis 2000 μm.

In einer weiteren vorteilhaften Ausführungsform des erfindungsgemäßen Gegenstandes kann die strahlenchemisch vernetzbare, geschäumte Selbstklebemasse auch als einseitiges Haftklebeband verwendet werden, indem diese auf ein Trägermaterial beschichtet wird.

Der allgemeine Ausdruck "Klebeband" umfasst im Sinne dieser Erfindung alle flächigen Gebilde wie in zwei Dimensionen ausgedehnte Abschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch eingedeckt mit Trennmaterialien wie silikonisiertem Papier oder silikonisierter Folie hergestellt werden.

Als Trägermaterial können alle bekannten Träger eingesetzt werden, zum Beispiel wie Gelege, Gewebe, Gewirke, Vliese, Folien, Papiere, Tissues, Schäume und geschäumte Folien. Geeignete Folien sind aus Polypropylen, vorzugsweise orientiertem, Polyester, Hart- und Weich-PVC. Bevorzugt sind Polyolefin-, Polyurethan-, EPDM- und Chloroprenschaum. Unter Polyolefin wird hier Polyethylen und Polypropylen verstanden, wobei Polyethylen wegen der Weichheit bevorzugt wird. Der Begriff Polyethylen schließt LDPE, aber auch Ethylencopolymere wie LLDPE und EVA ein. Insbesondere sind vernetzte Polyethylenschäume oder viskoelastische Träger geeignet. Letztere sind vorzugsweise aus Polyacrylat, besonders bevorzugt gefüllt mit hohlen Körpern aus Glas oder Polymeren. Die Träger können vor dem Zusammenbringen mit der Klebemasse durch Primerung oder physikalische Vorbehandlung wie Corona vorbereitet werden.

Durch die Schäumung von Selbstklebemassen mittels expandierbarer polymerer Mikrokugeln können Rohstoffkosten eingespart werden, nämlich aufgrund der Senkung der Raumgewichte auf bis zu 150 kg/m$^3$ und aufgrund des Einschichtaufbaus des Klebebands. Weiterhin verringern sich die Produktionskosten durch die Erhöhung der Beschichtungsgeschwindigkeiten, da für hohe Schichtdicken reduzierte Flächengewichte eingesetzt werden können.

Außerdem wird für den erfindungsgemäßen einschichtigen Gegenstand keine weitere Nachstrichmasse mehr benötigt, um ein doppelseitig klebendes Klebeband, ein so genanntes Schaumfix, zu erhalten, und zudem verbessert sich die Wiederablösbarkeit im Gegensatz zu einem dreischichtigen Produkt mit Sollbruchstellen an der Grenzschicht zwischen Nachstrichmasse und Träger beziehungsweise Polymerschaumkem.

Ebenfalls ergeben sich vorteilhafte Eigenschaften durch die Schäumung der Selbstklebemasse wie zum Beispiel die Erhöhung der Kohäsion beziehungsweise Scherfestigkeit des Produktes, die verbesserte Verklebungsfestigkeit auf rauen Untergründen oder den zusätzlichen Dämpfungscharakter.

Durch die Schäumung einer Selbstklebemasse auf Basis von strahlenchemisch vernetzbaren Vinylaromaten- beziehungsweise Styrolblockcopolymeren ergeben sich weitere besondere Eigenschaften wie zum Beispiel die erhöhte Verklebungsfestigkeit auf niederenergetischen Haftuntergründen und/oder die bessere thermische Stabilität.

Als niederenergetische Oberfläche sind unter anderem solche auf Basis von fluorhaltigen Polymeren, siliziumorganischen Polymeren, Polyolefinen oder auf Basis von Polymeren, welche fluorhaltige Segmente, Segmente aus siliziumorganischen Polymeren oder Polyolefinsegmente enthalten oder solche auf Basis eines Gemisches vorgenannter Polymere gegebenenfalls mit weiteren Polymeren.

Das erfindungsgemäße strahlenchemisch vernetzbare, geschäumte Selbstklebeband ist in seinen Eigenschaften den oben genannten doppelseitigen Schaumklebebändern mindestens äquivalent und kann gleichzeitig einfacher und wirtschaftlicher hergestellt werden, da der erfindungsgemäße Gegenstand aus einem Einschichtaufbau besteht.

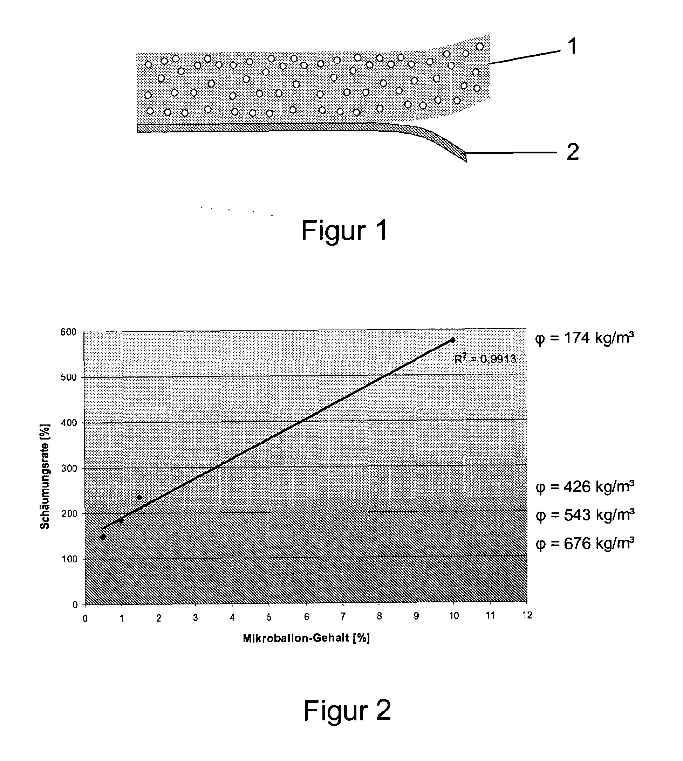

In Figur 1 ist ein geschäumtes, doppelseitiges Selbstklebeband im Einschichtaufbau dargestellt. Das geschäumte, doppelseitige Selbstklebeband besteht aus einer Schicht einer Selbstklebemasse 1, in der die Mikroballons bereits expandiert sind. Die Selbstklebemasse 1 ist auf ein Trennpapier 2 beschichtet.

In Figur 2 sind die Abhängigkeit des Raumgewichts sowie die Abhängigkeit der Schäumungsrate vom Mikroballongehalt abgebildet. Je höher der Mikroballongehalt (x-Achse), desto geringer die erzielte Schäumungsrate (y-Achse) bei jeweils konstanten Maschinen- und Herstellparametem.

**Prüfmethoden**

**Schälfestigkeit (Klebkraft auf Stahl (KKS))**

Die Prüfung der Schälfestigkeit (Klebkraft) erfolgt in Anlehnung an PSTC-1.

Ein Streifen des zu untersuchenden (Selbst)klebebandes wird in definierter Breite (Standard: 20 mm) auf einer geschliffenen Stahlplatte durch zehnmaliges Überrollen mittels einer 5 kg Stahlrolle verklebt. Doppelseitig klebende Klebebänder werden mit einer 36 $\mu$m dicken Hart-PVC-Folie rückseitig verstärkt. Die so präparierte Platte wird in das Prüfgerät eingespannt, der Klebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse sind in N/cm angegeben und über drei Messungen gemittelt. Alle Messungen werden in einem klimatisierten Raum bei 23 °C und 50 % relativer Luftfeuchte durchgeführt.

**Quantitative Ermittlung der Scherfestigkeit: Statischer Schertest SSZ**

Ein Klebeband wird auf einen vorgegebenen, starren Haftuntergrund (hier Stahl) aufgebracht und einer konstanten Scherbelastung ausgesetzt. Ermittelt wird die Haltedauer in Minuten.

Durch eine geeignete Plattenaufhängung (Winkel 179 $\pm$ 1 °) wird sichergestellt, dass sich das Klebeband nicht von der Unterkante der Platte abschält.

In erster Linie soll die Prüfung eine Aussage über die Kohäsivität der Masse liefern. Dies ist aber nur dann der Fall, wenn die Parameter Gewicht und Temperatur so gewählt werden, dass es bei der Prüfung tatsächlich zu Kohäsionsversagen kommt.

Ansonsten gibt der Test Aufschluss über die Adhäsion zum Haftgrund oder über eine Kombination aus Adhäsion und Kohäsivität der Masse.

Ein 13 mm breiter Streifen des zu prüfenden Klebebandes wird auf einem polierten Stahlplättchen (Prüfuntergrund) auf einer Länge von 5 cm mit einer 2 kg-Rolle durch 10 maliges Überrollen verklebt. Doppelseitig klebende Klebebänder werden auf der Rückseite mit einer 50 $\mu$m starken Aluminiumfolie abgedeckt und somit verstärkt. Anschließend wird eine Gurtschlaufe an das untere Ende des Klebebandes angebracht. Sodann wird mit Schraube und Mutter ein Adapterplättchen auf der Vorderseite der Schertestplatte befestigt, um den vorgegebenen Winkel von 179 $\pm$ 1° zu gewährleisten. Die Aufziehzeit zwischen Anrollen und Belastung soll zwischen 10 und 15 Minuten liegen. Die Gewichte (entsprechend einer Kraft von 5 N beziehungsweise 10 N) werden anschließend ruckfrei mit Hilfe der Gurtschlaufe angehängt.

Eine automatische Zähleruhr ermittelt nun den Zeitpunkt des Abscherens der Prüfmuster.

**Raumgewicht/ Dichte**

Das Raumgewicht beziehungsweise die Dichte einer beschichteten Selbstklebemasse wird über das Verhältnis vom Flächengewicht zu der jeweiligen Schichtdicke bestimmt:

$$\delta = \frac{m}{V} = \frac{MA}{d} \qquad [\delta] = \frac{[kg]}{[m^2] \cdot [m]} = \left[\frac{kg}{m^3}\right]$$

MA = Masseauftrag/Flächengewicht (ohne Trägergewicht) in [kg/m$^2$]
d = Schichtdicke (ohne Trägerdicke) in [m]

Im Folgenden soll die Erfindung anhand mehrerer Beispiele näher erläutert werden, ohne mit diesen die Erfindung in irgendeiner Weise beschränken zu wollen.

**Beispiele**

**Beispiel 1: Ungeschäumtes SBS**

1.1.) Masserezeptur:

| | |
|---|---|
| Styrol-Butadien-Styrol Blockcopolymer: *Kraton DKX 222* | 49,5 Gew.-% |
| Poly-$\alpha$-Pinen-Harz: *Dercolyte A115* | 49,5 Gew.-% |
| Octadecyl-3-(3,5-di-tert.butyl-4-hydroxyphenyl)-propionat: *Irganox 1076* | 1,0 Gew.-% |

1.2) Herstellanweisung:

Die oben genannten Rohstoffe wurden hierbei in einem heizbaren Kneter mit Sigma-Schaufel (Werner und Pfleiderer LUK 1,0 K3 ausgerüstet mit einem Thermostaten LTH 303 der Firma mgw LAUDA) bei einer Temperatur von +160 bis +180 °C und unter Inertisierung mit $CO_2$ als Schutzgas zu einer homogenen Mischung verarbeitet. Diese Haftklebemasse wurde anschließend über einen beheizbaren 2-Walzenkalander bahnförmig beschichtet, gegebenenfalls mittels Elektronenstrahlung bei der angegebenen Dosis vernetzt und hinsichtlich der klebtechnischen Eigenschaften untersucht.

1.3.) Eigenschaften:

Tabelle 1: Klebtechnische Eigenschaften der Klebemassen gemäß Beispiel 1

| Muster | MA [g/m²] | Dicke [µm] | Dichte [kg/m³] | KKS [N/cm] | SSZ 70°C 5N [min] |
|---|---|---|---|---|---|
| unvernetzt | 960 | 1032 | 930 | 9,1 | 50 |
| 195kV/60kGy | 962 | 1035 | 929 | 9,0 | > 10000 |

**Beispiel 2: Geschäumtes SBS**

2.1.) Masserezeptur:

| | |
|---|---|
| Styrol-Butadien-Styrol Coblockpolymer: *Kraton DKX 222* | 49,5 Gew.-% |
| Poly-$\alpha$-Pinen-Harz: *Dercolyte A115* | 49,5 Gew.-% |
| Octadecyl-3-(3,5-di-tert.butyl-4-hydroxyphenyl)-propionat: *Irganox 1076* | 1,0 Gew.-% |
| Mikroballons: *Expancel 092 DU 40* | 5,0 Gew.-% |

2.2.) Verarbeitung:

Einem kontinuierlichen Mischaggregat wie zum Beispiel einem Planetwalzenextruder wurden alle oben genannten Rohstoffe (Kraton DKX 222, Dercolyte A115, Irganox 1076, Expancel 092 DU 40) in entsprechender Menge als Granulat und/oder Pulver zugeführt und bei optimalen Maschinenparametem compoundiert. Die so homogenisierte Selbstklebemasse hatte eine Düsenaustrittstemperatur von 109 °C, womit die in der Polymermatrix gleichmäßig verteilten Mikroballons noch nicht expandiert waren beziehungsweise allenfalls teilweise und in geringem Maße vorexpandiert vorlagen. Die ausgeformten Massestränge wurden anschließend in einem weiteren Mischaggregat wie einem Einschneckenextruder gegeben, wobei den Mikroballons die optimale Schäumungstemperatur und -energie zugeführt wurde, um bei Düsenaustritt beziehungsweise Druckausgleich zu expandieren. Anschließend wurde der Polymerschaum mit Hilfe eines beheizbaren 2-Walzenkalanders auf ein beidseitig abgestuft silikonisiertes Trennpapier (80 µm) mit einer Dicke von 1000 µm beschichtet und auf einen 3'-Pappkern aufgewickelt. Bei diesem Schaumfix (einschichtiges, beidseitig klebendes Klebeband) wurde eine Dichte von 480 kg/m³ eingestellt. (Im Gegensatz dazu besitzt die ungeschäumte Polymermatrix eine Dichte von 920 kg/m³, es wurde also eine Massereduzierung um ca. 50 % erzielt.)

Dieses geschäumte doppelseitige Selbstklebeband auf Basis von SBS wurde nun mittels Elektronenstrahlung bei unterschiedlichen Dosen vernetzt und anschließend hinsichtlich der klebtechnischen Eigenschaften untersucht.

2.3.) Eigenschaften:

Dieses doppelseitige selbstklebende Schaumfix erreichte folgende Eigenschaften:

Tabelle 2: Klebtechnische Eigenschaften der Klebemassen gemäß Beispiel 2

| Muster | MA [g/m²] | Dicke [μm] | Dichte [kg/m³] | KKS [N/cm] | SSZ RT 10N [min] | SSZ 70°C 5N [min] |
|---|---|---|---|---|---|---|
| unvernetzt | 511 | 1063 | 480 | 8,5 | > 10000 | 44 |
| 195 kV / 30kGy | | | | 8,4 | > 10000 | 121 |
| 195 kV / 60kGy | | | | 8,5 | > 10000 | 2743 |
| 195 kV / 90kGy | | | | 8,7 | > 10000 | > 30000 |

Bei der Gegenüberstellung der Beispiele 1 und 2 wird deutlich, dass die Klebkraft der geschäumten Selbstklebemasse im Vergleich zur ungeschäumten schichtdicken- und rezepturidentischen Klebemasse nur um maximal 8 % reduziert ist.

Im Beispiel 2 ist also ein Selbstklebeband im Einschichtaufbau hergestellt, welches die Vorteile eines geschlossenzelligen Schaums mit hoher Scherfestigkeit kombiniert, ohne einen wesentlichen Klebkraftabfall zu erzeugen. Dies gilt insbesondere auch bei höheren Temperaturen, bei denen kein Versagen zu erkennen ist. Des Weiteren bietet das erfindungsgemäße Klebeband die Vorteile von Klebebändern mit geschäumten Klebemassen wie das gute Anschmiegen der Klebemasse auf rauen Untergründen und wie die Einsparung von Klebemasse bei gleicher Schichtdicke.

**Beispiel 3: Polymerblend SBS/NR**

3.1.) Masserezeptur:

| | |
|---|---|
| Styrol-Butadien-Styrol Coblockpolymer: *Kraton DKX 222* | 22,75 Gew.-% |
| Naturkautschuk Polyisopren: *SVR L* | 22,75 Gew.-% |
| Poly-α-Pinen-Harz: *Dercolyte A115* | 22,75 Gew.-% |
| Aliphatisches Kohlenwasserstoffharz: *Piccotac 1100-E* | 22,75 Gew.-% |
| Octadecyl-3-(3,5-di-tert.butyl-4-hydroxyphenyl)-propionat: *Irganox 1076* | 1,0 Gew.-% |
| Mikroballons: *Expancel 092 DU 40* | 8,0 Gew.-% |

3.2.) Verarbeitung: siehe Beispiel 2.

3.3.) Eigenschaften:

Tabelle 3: Klebtechnische Eigenschaften der Klebemassen gemäß Beispiel 3

| Muster | MA [g/m²] | Dicke [μm] | Dichte [kg/m³] | KKS 90° 300mm/min o.s. [N/cm] | SSZ Stahl RT10N o.s. [min] | SSZ Stahl 70°C 5N o.s. [min] |
|---|---|---|---|---|---|---|
| frisch | 368 | 1050 | 350 | 7,9 | >10000 | 125 |
| 168kV / 30kGy | | | | 7,7 | | 586 |
| 168kV / 60kGy | | | | 7,6 | | 675 |
| 168kV / 90kGy | | | | 7,8 | | >10000 |

**Beispiel 4: Polymerblend SBS/EVA**

4.1.) Masserezeptur:

| | |
|---|---|
| Styrol-Butadien-Styrol Blockcopolymer: *Kraton DKX 222* | 24,5 Gew.-% |
| Ethylen-Vinylacetat-Kautschuk: *Levamelt 456* | 24,5 Gew.-% |
| Glycerinester des hydrierten Kolophoniums: Foral 85-E | 45,0 Gew.-% |

(fortgesetzt)

| | |
|---|---|
| Octadecyl-3-(3,5-di-tert.butyl-4-hydroxyphenyl)-propionat: *Irganox 1076* | 1,0 Gew.-% |
| Mikroballons: *Expancel 092 DU 40* | 5,0 Gew.-% |

4.2.) Verarbeitung: siehe Beispiel 2.

4.3.) Eigenschaften:

Tabelle 4: Klebtechnische Eigenschaften der Klebemassen gemäß Beispiel 4

| Muster | MA [g/m$^2$] | Dicke [μm] | Dichte [kg/m$^3$] | KKS 90° 300mm/min o.s. [N/cm] | KKPE 90° 300mm/min o.s. [N/cm] | SSZ Stahl RT 10N o.s. [min] | SSZ Stahl 70°C 5N o.s. [min] |
|---|---|---|---|---|---|---|---|
| frisch | 424 | 1010 | 420 | 12,3 | 7,7 | >10000 | 314 |
| 168kV / 30kGy | | | | 11,8 | | | 539 |
| 168kV / 60kGy | | | | 11,9 | | | 896 |
| 168kV / 90kGy | | | | 11,8 | | | >10000 |

Auch die Beispiele 3 und 4 zeigen ein Selbstklebeband im Einschichtaufbau hergestellt, welche die Vorteile eines geschlossenzelligen Schaums mit hoher Scherfestigkeit kombinieren, ohne einen wesentlichen Klebkraftabfall zu erzeugen.

**Patentansprüche**

1. Selbstklebemasse bestehend aus einem Gemisch enthaltend:

   • einen Polymerblend aus thermoplastischen und/oder nicht-thermoplastischen Elastomeren mit mindestens einem Vinylaromatenblockcopolymer, das einen Anteil größer 30 Gew.-% an 1,2-verknüpften Dien im Elastomerblock enthält
   • mindestens ein Klebharz
   • expandierte polymere Mikrokugeln

   wobei das Vinylaromatenblockcopolymer durch Elektronen- und/oder UV-Strahlen im Elastomerblock vernetzt ist.

2. Selbstklebemasse nach Anspruch 1,
   **dadurch gekennzeichnet, dass**
   als Vinylaromat Styrol gewählt wird.

3. Selbstklebemasse nach Anspruch 1 oder 2,
   **dadurch gekennzeichnet, dass**
   der Anteil von Vinylaromaten- beziehungsweise Styrolblockcopolymeren bezogen auf die gesamte Klebmasse 20 bis 70 Gew.-%, bevorzugt 30 bis 60 Gew.-%, ganz besonders bevorzugt 35 bis 55 Gew.-% beträgt.

4. Selbstklebemasse nach zumindest einem der Ansprüche 1 bis 3,
   **dadurch gekennzeichnet, dass**
   der Anteil der Mikroballons bezogen auf die gesamte Klebmasse vor der Expansion in der Selbstklebemasse zwischen größer 0 Gew.-% und 30 Gew.-%, insbesondere zwischen 1,5 Gew.-% und 10 Gew.-% beträgt.

5. Selbstklebemasse nach zumindest einem der vorherigen Ansprüche,
   **dadurch gekennzeichnet, dass**
   der Anteil der Klebharze bezogen auf die gesamte Klebmasse zwischen 20 Gew.-% und 70 Gew.-%, insbesondere zwischen 40 Gew.-% und 60 Gew.-% beträgt.

6. Selbstklebemasse nach zumindest einem der vorherigen Ansprüche,
**dadurch gekennzeichnet, dass**
die Selbstklebemasse weitere Abmischkomponenten enthält, insbesondere Weichmacher, Alterungsschutzmittel, Verarbeitungshilfsmittel, Füllstoffe, Farbstoffe, optische Aufheller, Stabilisatoren.

7. Selbstklebemasse nach zumindest einem der vorherigen Ansprüche,
**dadurch gekennzeichnet, dass**
der Polymerweichmacher auf Basis eines Polyesters der Phthalsäure, der Azelainsäure, der Sebacinsäure oder bevorzugt der Adipinsäure ist.

8. Selbstklebemasse nach zumindest einem der vorherigen Ansprüche,
**dadurch gekennzeichnet, dass**
die Selbstklebemasse Vernetzungspromotoren enthält.

9. Selbstklebemasse nach zumindest einem der vorherigen Ansprüche,
**dadurch gekennzeichnet, dass**
die Dichte der Selbstklebemasse nach Aktivierung der Mikroballons auf bis zu 150 kg/m$^3$ sinkt und vorzugsweise zwischen 300 und 800 kg/m$^3$ liegt.

10. Selbstklebemasse nach zumindest einem der vorherigen Ansprüche,
**dadurch gekennzeichnet, dass**
die Dicke der Selbstklebemasse in einem Klebeband auf einem bahnförmigen Trägermaterial zwischen 20 $\mu$m und 3000 $\mu$m, vorzugsweise zwischen 40 $\mu$m und 150 $\mu$m beträgt oder aufgetragen auf einem Releasematerial 20 $\mu$m bis 2000 $\mu$m.

11. Verwendung einer Selbstklebemasse gemäß zumindest einem der vorherigen Ansprüche zur Herstellung eines doppelseitig klebenden Klebebands, indem die Selbstklebemasse als Streifen vorliegt.

12. Verwendung einer Selbstklebemasse gemäß zumindest einem der vorherigen Ansprüche zur Herstellung eines einseitig klebenden Klebebands, indem die Selbstklebemasse auf ein Trägermaterial aufgebracht wird.


**Claims**

1. Self-adhesive composed of a mixture comprising:

   • a polymer blend of thermoplastic and/or non-thermoplastic elastomers with at least one vinylaromatic block copolymer which contains a fraction of more than 30% by weight of 1,2-linked diene in the elastomer block
   • at least one tackifier resin
   • expanded polymeric microbeads

   the vinylaromatic block copolymer being crosslinked in the elastomer block by electron beams and/or UV rays.

2. Self-adhesive according to Claim 1,
**characterized in that**
styrene is selected as vinylaromatic.

3. Self-adhesive according to Claim 1 or 2,
**characterized in that**
the fraction of vinylaromatic or styrene block copolymers, based on the total adhesive, is 20% to 70%, preferably 30% to 60%, very preferably 35% to 55%, by weight.

4. Self-adhesive according to at least one of Claims 1 to 3,
**characterized in that**
the fraction of the microballoons, based on the total adhesive, prior to expansion, in the self-adhesive is between greater than 0% and 30% by weight, more particularly between 1.5% and 10% by weight.

5. Self-adhesive according to at least one of the preceding claims,

**characterized in that**
the fraction of the tackifier resins, based on the total adhesive, is between 20% and 70% by weight, more particularly between 40% and 60% by weight.

6. Self-adhesive according to at least one of the preceding claims,
**characterized in that**
the self-adhesive comprises further blending components, more particularly plasticizers, ageing inhibitors, processing assistants, fillers, dyes, optical brighteners, stabilizers.

7. Self-adhesive according to at least one of the preceding claims,
**characterized in that**
the polymer plasticizer is based on a polyester of phthalic acid, of azelaic acid, of sebacic acid or, preferably, of adipic acid.

8. Self-adhesive according to at least one of the preceding claims,
**characterized in that**
the self-adhesive comprises crosslinking promoters.

9. Self-adhesive according to at least one of the preceding claims,
**characterized in that**
the density of the self-adhesive following activation of the microballoons drops to down to 150 kg/m$^3$ and is situated preferably between 300 and 800 kg/m$^3$.

10. Self-adhesive according to at least one of the preceding claims,
**characterized in that**
the thickness of the self-adhesive in an adhesive tape on a carrier material in web form is between 20 $\mu$m and 3000 $\mu$m, preferably between 40 $\mu$m and 150 $\mu$m, or, applied to a release material, 20 $\mu$m to 2000 $\mu$m.

11. Use of a self-adhesive according to at least one of the preceding claims for producing a double-sided adhesive tape, the self-adhesive being in strip form.

12. Use of a self-adhesive according to at least one of the preceding claims for producing a single-sided adhesive tape, the self-adhesive being applied to a carrier material.

**Revendications**

1. Composition adhésive sensible à la pression constituée d'un mélange contenant :

    - un alliage polymère d'élastomères thermoplastiques et/ou non thermoplastiques avec au moins un copolymère séquencé de composés aromatiques de vinyle, qui a une proportion supérieure à 30 % en poids de diène relié en 1,2 dans la séquence élastomère,
    - au moins une résine adhésive,
    - des microbilles polymères expansées,

    le copolymère séquencé de composés aromatiques de vinyle étant réticulé par des faisceaux d'électrons et/ou UV dans la séquence élastomère.

2. Composition adhésive sensible à la pression selon la revendication 1, **caractérisée en ce que** le styrène est choisi en tant que composé aromatique de vinyle.

3. Composition adhésive sensible à la pression selon la revendication 1 ou 2, **caractérisée en ce que** la proportion de copolymères séquencés de composés aromatiques de vinyle ou de styrène par rapport à la composition adhésive totale est de 20 à 70 % en poids, de préférence de 30 à 60 % en poids, de manière tout particulièrement préférée de 35 à 55 % en poids.

4. Composition adhésive sensible à la pression selon au moins l'une quelconque des revendications 1 à 3, **caractérisée en ce que** la proportion des microballons par rapport à la composition adhésive totale avant l'expansion dans la composition adhésive sensible à la pression est comprise entre plus de 0 % en poids et 30 % en poids, notamment entre 1,5 % en poids et 10 % en poids.

5. Composition adhésive sensible à la pression selon au moins l'une quelconque des revendications précédentes, **caractérisée en ce que** la proportion des résines adhésives par rapport à la composition adhésive totale est comprise entre 20 % en poids et 70 % en poids, notamment entre 40 % en poids et 60 % en poids.

6. Composition adhésive sensible à la pression selon au moins l'une quelconque des revendications précédentes, **caractérisée en ce que** la composition adhésive sensible à la pression contient des composants de mélange supplémentaires, notamment des plastifiants, des agents antivieillissement, des adjuvants d'usinage, des charges, des colorants, des azurants optiques, des stabilisateurs.

7. Composition adhésive sensible à la pression selon au moins l'une quelconque des revendications précédentes, **caractérisée en ce que** le plastifiant polymère est à base d'un polyester de l'acide phtalique, de l'acide azélaïque, de l'acide sébacique ou de préférence de l'acide adipique.

8. Composition adhésive sensible à la pression selon au moins l'une quelconque des revendications précédentes, **caractérisée en ce que** la composition adhésive sensible à la pression contient des promoteurs de réticulation.

9. Composition adhésive sensible à la pression selon au moins l'une quelconque des revendications précédentes, **caractérisée en ce que** la densité de la composition adhésive sensible à la pression après activation des microballons chute jusqu'à 150 kg/m$^3$ et se situe de préférence entre 300 et 800 kg/m$^3$.

10. Composition adhésive sensible à la pression selon au moins l'une quelconque des revendications précédentes, **caractérisée en ce que** l'épaisseur de la composition adhésive sensible à la pression dans un ruban adhésif sur un matériau support en forme de bande est comprise entre 20 μm et 3000 μm, de préférence entre 40 μm et 150 μm, ou appliquée sur un matériau antiadhésif de 20 μm à 2 000 μm.

11. Utilisation d'une composition adhésive sensible à la pression selon au moins l'une quelconque des revendications précédentes pour la fabrication d'un ruban adhésif double face, la composition adhésive sensible à la pression se présentant sous la forme de bandes.

12. Utilisation d'une composition adhésive sensible à la pression selon au moins l'une quelconque des revendications précédentes pour la fabrication d'un ruban adhésif simple face, la composition adhésive sensible à la pression étant appliquée sur un matériau support.

Figur 1

Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9324547 A1
- WO 9729140 A1
- DE 2105877 C
- EP 0257984 A1
- DE 3537433 A1
- WO 9531225 A1
- EP 0693097 A1
- WO 9818878 A1
- DE 19730854 A1

- WO 200990119 A
- WO 200311954 A
- EP 257984 A
- US 2004229000 A
- US 5393787 A
- WO 0006637 A
- EP 0447855 A1
- US 4133731 A
- US 4820746 A